# EUROPÄISCHE PATENTANMELDUNG

(11) **EP 4 238 411 A1**
(43) Veröffentlichungstag der Anmeldung: **06.09.2023**
(21) Anmeldenummer: 23159947.3
(22) Anmeldetag: 03.03.2023
(51) Int. Cl.: A01K 3/00

(54) **ELEKTROCONNECTORVORRICHTUNG**

(30) Priorität: 03.03.2022 DE 102022105048
(71) Anmelder: Bäuerle, Ulrich, 78333 Stockach (DE)
(72) Erfinder: Bäuerle, Ulrich, 78333 Stockach (DE)
(74) Vertreter: Daub, Thomas

(57) **Zusammenfassung**

Die Erfindung geht aus von einer Elektroconnectorvorrichtung (10, 10', 12) für einen Elektrozaun, mit zumindest einer Verbindereinheit (14, 14', 16) zu einem Verbinden eines Zaunpfahls (126, 126') mit einem Elektrozaunseil, die zumindest eine Gehäuseeinheit (18, 18', 20) und zumindest eine elektrische Leitereinheit (22, 22', 24) umfasst.

Es wird vorgeschlagen, dass die elektrische Leitereinheit (22, 22', 24) zumindest ein elektrisches Verbindungselement (26, 26', 28, 28') umfasst, welches zumindest zum Großteil in der Gehäuseeinheit (18, 18', 20) angeordnet ist.

## Beschreibung

### Stand der Technik

Die Erfindung betrifft eine Elektroconnectorvorrichtung für einen Elektrozaun, mit zumindest einer Verbindereinheit zu einem Verbinden eines Zaunpfahls mit einem Elektrozaunseil, die zumindest eine Gehäuseeinheit und zumindest eine elektrische Leitereinheit umfasst, nach dem Oberbegriff des Anspruchs 1.

Aus DE 602 05 028 T2 ist bereits eine Elektroconnectorvorrichtung für einen Elektrozaun bekannt, wobei die bereits bekannte Elektroconnectorvorrichtung zumindest eine Verbindereinheit zu einem Verbinden eines Zaunpfahls mit einem Elektrozaunseil aufweist, die zumindest eine Gehäuseeinheit und zumindest eine elektrische Leitereinheit umfasst.

Die Aufgabe der Erfindung besteht insbesondere darin, eine gattungsgemäße Vorrichtung mit vorteilhaften elektrischen Eigenschaften bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Elektroconnectorvorrichtung für einen Elektrozaun, mit zumindest einer Verbindereinheit zu einem Verbinden eines Zaunpfahls mit einem Elektrozaunseil, die zumindest eine Gehäuseeinheit und zumindest eine elektrische Leitereinheit umfasst.

Es wird vorgeschlagen, dass die elektrische Leitereinheit zumindest ein elektrisches Verbindungselement umfasst, welches zumindest zum Großteil in der Gehäuseeinheit angeordnet ist.

Unter einer "Elektroconnectorvorrichtung" soll vorzugsweise zumindest ein Teil, bevorzugt eine Unterbaugruppe, eines Elektroconnectorsystems, insbesondere eines Zaunpfahls eines Elektrozauns, insbesondere eines Elektrozauns, verstanden werden. Insbesondere kann das Elektroconnectorsystem den gesamten Zaunpfahl, insbesondere den gesamten Elektrozaun, umfassen. Vorzugsweise ist die Elektroconnectorvorrichtung zu einem Einsatz als Teil des Elektrozauns vorgesehen. Vorzugsweise ist die Elektroconnectorvorrichtung, insbesondere als Teil des Elektrozauns, zu einer Befestigung von Elektrozaunseilen, insbesondere Elektrozaunbändern, an zumindest einem Zaunpfahl, vorgesehen. Vorzugsweise ist die Elektroconnectorvorrichtung mit zumindest einem Zaunpfahl, bevorzugt mit jedem Zaunpfahl, des Elektrozauns gekoppelt, insbesondere verbunden, wie beispielsweise verschraubt, verklebt und/oder verrastet. Bevorzugt ist an jedem Zaunpfahl des Elektrozauns zumindest eine Elektroconnectorvorrichtung angeordnet. Es ist denkbar, dass die Elektroconnectorvorrichtung oder ein Elektroconnectorsystem, das zumindest eine Elektroconnectorvorrichtung umfasst, schwenkbar an einem Zaunpfahl angeordnet ist oder dass die Elektroconnectorvorrichtung oder das Elektroconnectorsystem selbst einen Zaunpfahl bildet, wobei vorzugsweise die Elektroconnectorvorrichtung mittelbar oder unmittelbar mit einem Erdspieß verbunden ist, insbesondere über zumindest eine Verbindungsschnittstelle der Elektroconnectorvorrichtung. Darunter, dass ein Objekt zu einer bestimmten Funktion vorgesehen ist, soll vorzugsweise verstanden werden, dass das Objekt diese bestimmte Funktion in zumindest einem Anwendungs- und/oder Betriebszustand erfüllt und/oder ausführt. Unter einem "Betriebszustand" soll vorzugsweise ein Zustand verstanden werden, in dem die Elektroconnectorvorrichtung mit zumindest einem Zaunpfahl und/oder mit zumindest einem Elektrozaunseil, insbesondere Elektrozaunband, verbunden ist, und/oder an der zumindest einen Leitereinheit eine elektrische Spannung anliegt. Der Begriff Elektrozaunseil wird im Folgenden stellvertretend für jegliche Form von elektrischem Strom führenden Bauteilen, welche zwischen zwei Zaunpfählen spannbar sind, wie insbesondere Elektrozaunbändern, Elektrozaunkordeln, Elektrozaundrähten oder dergleichen, verwendet.

Vorzugsweise ist die Gehäuseeinheit dazu ausgebildet, die elektrische Leitereinheit zumindest teilweise elektrisch zu isolieren. Insbesondere ist die Gehäuseeinheit dazu ausgebildet, die Leitereinheit zumindest zum Großteil zu umschließen, insbesondere gemessen an einer Außenfläche der Leitereinheit. Bevorzugt ist die Gehäuseeinheit zu einem einseitigen Verbinden mit zumindest einem Zaunpfahl ausgebildet. Bevorzugt weist die Gehäuseeinheit an zumindest einer Außenseite, bevorzugt an zumindest einer größten Außenseite der Gehäuseeinheit, zumindest ein Verbindungsmittel, wie beispielsweise eine Verbindungsausnehmung für eine Schraubverbindung oder dgl., ein Verbindungselement wie einen Pin, Haken, Öse, Lasche, Rasthaken, Schraube, Nagel oder dgl. auf, insbesondere zu der Verbindung mit dem zumindest einen Zaunpfahl. Bevorzugt ist die Gehäuseeinheit vollständig aus einem elektrischen Isolator, bevorzugt einem Kunststoff, beispielsweise einem PU-Kunststoff, ausgebildet. Bevorzugt weist die Gehäuseeinheit eine Längsachse auf, welche zumindest im Wesentlichen parallel zu einer Längsachse der Leitereinheit ausgerichtet ist. Unter einer "Längsachse" eines Objekts soll insbesondere eine Achse verstanden werden, welche parallel zu einer längsten Kante eines kleinsten, gedachten, geometrischen Quaders verläuft, welcher das Objekt gerade noch vollständig umschließt, und bevorzugt durch einen geometrischen Mittelpunkt des Objekts, insbesondere des Quaders, verläuft. Vorzugsweise umfasst die Gehäuseeinheit genau zwei Gehäuseteile, welche bis auf maximale Abweichungen von 10% nach Volumen gleich groß ausgebildet sind und welche entlang der Längsachse der Gehäuseeinheit miteinander verbindbar, insbesondere verbunden, sind. Bevorzugt sind die zumindest zwei Gehäuseteile miteinander verbunden wie beispielsweise stoffschlüssig miteinander verbunden, miteinander verrastet, verklebt, verschraubt und/oder verclippt.

Bevorzugt umfasst die Gehäuseeinheit eine Verbindungsschnittstelle zu einer lösbaren Verbindung mit zumindest einer korrespondierenden Verbindungsschnittstelle einer Verbinderkoppeleinheit oder einer Gehäuseeinheit einer weiteren Elektroconnectorvorrichtung. Die Verbindungsschnittstelle ist bevorzugt zu einer form- und/oder kraftschlüssigen Verbindung mit der korrespondierenden Verbindungsschnittstelle der Verbinderkoppeleinheit oder der weiteren Elektroconnectorvorrichtung vorgesehen. Insbesondere ist die Verbindungsschnittstelle als eine Rastverbindungsschnittstelle ausgebildet. Die Verbindungsschnittstelle umfasst vorzugsweise zumindest einen federelastischen Rastfortsatz, der zu einem Eingriff in eine Rastausnehmung der korrespondierenden Verbindungsschnittstelle vorgesehen ist, oder die Verbindungsschnittstelle umfasst zumindest eine Rastausnehmung zu einer Verbindung mit einem federelastischen Rastfortsatz der korrespondierenden Verbindungsschnittstelle. Bevorzugt ist die Verbindungsschnittstelle als steckbare Verbindungsschnittstelle ausgebildet. Insbesondere weist die Verbindungsschnittstelle eine Ausgestaltung auf, wie dies beispielsweise bei Schnallen an einem Hüftgurt von Rucksäcken oder bei Verschlüssen von Taschen oder von Rucksäcken einem Fachmann bereits bekannt ist. Bevorzugt umfasst die Verbindungsschnittstelle zumindest zwei Rastausnehmungen oder zumindest zwei parallel zueinander ausgerichtete federelastische Rastfortsätze. Bei einer Ausgestaltung der Verbindungsschnittstelle mit einem federelastischen Rastfortsatz ist dieser Rastfortsatz bevorzugt in die Rastausnehmung der korrespondierenden Verbindungsschnittstelle einsteckbar. Bei einer Ausgestaltung der Verbindungsschnittstelle mit einer Rastausnehmung ist der Rastfortsatz der korrespondierenden Verbindungsschnittstelle in diese Rastausnehmung einsteckbar. Alternativ oder zusätzlich umfasst die Verbindungsschnittstelle magnetische Elemente zu einer Positionssicherung. Es ist denkbar, dass die Gehäuseeinheit an zumindest einem Ende der Gehäuseeinheit entlang der Längsachse der Gehäuseeinheit eine V-förmige Vertiefung aufweist, die die Verbindungsschnittstelle bildet oder an der die Verbindungsschnittstelle angeordnet ist. Andere, einem Fachmann als sinnvoll erscheinende Ausgestaltungen oder Anordnungen der Verbindungsschnittstelle sind ebenfalls denkbar. Vorzugsweise ist die V-förmige Vertiefung an dem zumindest einen Verbindungselement angeordnet. Vorzugsweise ist die V-förmige Vertiefung symmetrisch, insbesondere spiegelsymmetrisch, um die Längsachse der Gehäuseeinheit ausgebildet. Bevorzugt ist die V-förmige Vertiefung dazu ausgebildet, ein weiteres, insbesondere zu der zumindest einen Verbindereinheit externes, Verbindungselement zu dem zumindest einen Verbindungselement der Verbindereinheit zu führen. Vorzugsweise bilden Schenkel der V-förmigen Vertiefung zumindest einen 10°, bevorzugt zumindest einen 20°, Winkel mit der Längsachse der Gehäuseeinheit. Vorzugsweise weist die Gehäuseeinheit an zumindest einem Ende der Gehäuseeinheit entlang der Längsachse der Gehäuseeinheit eine zu der Längsachse zumindest im Wesentlichen senkrechte Außenfläche auf. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Die Gehäuseeinheit kann an beiden Enden der Gehäuseeinheit entlang der Längsachse der Gehäuseeinheit eine, insbesondere gleich geformte und/oder gleich große, V-förmige Vertiefung aufweisen.

Bevorzugt umfasst die elektrische Leitereinheit zumindest ein Drahtelement, welches bei Raumtemperatur elektrisch leitfähig ausgebildet ist. Insbesondere ist das zumindest eine Drahtelement aus einem Metallmaterial ausgebildet, wie beispielsweise Kupfer, Eisen, Aluminium und/oder Legierungen ausgebildet. Insbesondere kann das zumindest eine Drahtelement aus einer in Bezug auf eine Leitfähigkeit metallisch wirkenden Keramik ausgebildet sein. Vorzugsweise weist das zumindest eine Drahtelement eine maximale Erstreckung entlang der Längsachse der Gehäuseeinheit auf, welche mindestens 50%, bevorzugt zumindest 60%, besonders bevorzugt zumindest 75% und ganz besonders bevorzugt zumindest 80%, einer maximalen Erstreckung der Gehäuseeinheit entlang der Längsachse der Gehäuseeinheit beträgt. Vorzugsweise ist das zumindest eine Drahtelement zumindest zum Großteil in der Gehäuseeinheit angeordnet. Das zumindest eine Drahtelement kann zumindest teilweise, bevorzugt zumindest zum Großteil, in die Gehäuseeinheit eingelassen sein. Das zumindest eine Drahtelement kann zumindest teilweise, bevorzugt zumindest zum Großteil in die Gehäuseeinheit eingegossen, beispielsweise durch ein Spritzgussverfahren oder dergleichen, sein. Insbesondere kann das zumindest eine Drahtelement zumindest teilweise, bevorzugt zumindest zum Großteil, zur Isolation mit einem Kunststoff ummantelt, insbesondere umgossen, sein und/oder in einen Kunststoff eingelassen sein. Vorzugsweise ist das zumindest eine Drahtelement aus einem anderen Material als das zumindest eine elektrische Verbindungselement ausgebildet. Das zumindest eine Drahtelement kann aus dem gleichen Material ausgebildet sein wie das zumindest eine elektrische Verbindungselement. Vorzugsweise sind das zumindest eine Drahtelement und die Gehäuseeinheit zusammen dazu ausgebildet, zumindest ein Elektrozaunseil mit zumindest einem Zaunpfahl zu verbinden. Vorzugsweise ist das zumindest eine Verbindungselement dazu ausgebildet, eine Verbindereinheit mit einer weiteren Verbindereinheit elektrisch zu verbinden. Vorzugsweise ist das zumindest eine Drahtelement zu einer direkten Verbindung mit zumindest einem Elektrozaunseil, insbesondere zumindest zwei und/oder zumindest drei Elektrozaunseilen, ausgebildet, insbesondere speziell geformt und/oder an der Gehäuseeinheit angeordnet. Vorzugsweise ist das zumindest eine Verbindungselement direkt, insbesondere unmittelbar, mit dem zumindest einen Drahtelement, insbesondere elektrisch leitend, verbunden, bevorzugt durch eine schraub- und/oder verformungsgesicherte Steckverbindung. Insbesondere kann das zumindest eine Verbindungselement einstückig mit dem zumindest einen Drahtelement ausgebildet sein.

Es ist denkbar, dass mittels der elektrischen Leitereinheit weitere Vorrichtungen an die Elektroconnectorvorrichtung angeschlossen werden können, insbesondere derart, dass die weiteren Vorrichtungen über die Elektroconnectorvorrichtung mit Strom versorgt werden können. Beispielsweise ist denkbar, dass eine optische Erfassungsvorrichtung, wie beispielsweise eine Kamera oder eine Infrarotkamera o. dgl., und eine Leuchtvorrichtung, insbesondere ein LED-Leuchtband o. dgl., mit der elektrischen Leitereinheit verbunden sind, wobei beispielsweise denkbar ist, dass in Abhängigkeit von einer Erfassung einer Art eines Tieres mittels der optischen Erfassungsvorrichtung eine Farbe der Leuchtvorrichtung veränderbar ist. Es kann beispielsweise in Abhängigkeit von der Art des Tieres, wie beispielsweise Rotwild, Wildschwein o. dgl. eine speziell für diese Tierart als störend empfundene Farbe ausgegeben werden, um das Tier von dem Elektrozaun fernzuhalten. Andere, einem Fachmann als sinnvoll erscheinende Anschluss- oder Einsatzmöglichkeiten von angeschlossenen oder anschließbaren Vorrichtungen sind ebenfalls denkbar.

Vorzugsweise weist das zumindest eine Verbindungselement in einem Querschnitt senkrecht zu einer Längsachse des zumindest einen Verbindungselements eine Außenkontur auf, welche größer ist als eine Außenkontur des zumindest einen Drahtelements in einem Bereich direkt an dem zumindest einen Verbindungselement in einem Querschnitt senkrecht zu einer Längsachse des zumindest einen Drahtelements in einem ungebogenen Bereich direkt an dem zumindest einen Verbindungselement. Vorzugsweise ist das zumindest eine Verbindungselement zumindest zu 55% in der Gehäuseeinheit angeordnet, insbesondere gemessen anhand einer maximalen Erstreckung des Verbindungselements entlang einer Längsachse des Verbindungselements. Vorzugsweise ist die Längsachse des zumindest einen Verbindungselements zumindest im Wesentlichen parallel zu der Längsachse der Gehäuseeinheit.

Durch die erfindungsgemäße Ausgestaltung der Elektroconnectorvorrichtung kann eine vorteilhafte elektrische Stromführung für einen Elektrozaun erreicht werden. Insbesondere kann eine vorteilhafte Teilung von zwei Weiden voneinander durch einen Elektrozaun erreicht werden. Es kann zumindest ein besonders vorteilhaft geschütztes Verbindungselement erreicht werden. Insbesondere können vorteilhaft verschiedene Elektrozaunseile elektrisch miteinander verbunden werden. Besonders vorteilhaft können Elektrozaunseile von verschiedenen Höhen des Elektrozauns elektrisch miteinander verbunden werden, insbesondere zu einem vorteilhaften Verbinden mit einem elektrischen Energiereservoir. Es kann eine vorteilhaft witterungsbeständige, insbesondere hitzebeständige, elektrische Verbindung verschiedener Elektrozaunseile erreicht werden.

Des Weiteren wird vorgeschlagen, dass das zumindest eine elektrische Verbindungselement als eine Verbindungsbuchse ausgebildet ist. Vorzugsweise ist das zumindest eine als eine Verbindungsbuchse ausgebildete elektrische Verbindungselement zumindest zu 60%, bevorzugt zumindest zu 70%, besonders bevorzugt zumindest zu 80% und ganz besonders bevorzugt zumindest zu 90% in der Gehäuseeinheit angeordnet, insbesondere nach Volumen. Vorzugsweise ist das zumindest eine als eine Verbindungsbuchse ausgebildete elektrische Verbindungselement vollständig in der Gehäuseeinheit angeordnet. Vorzugsweise weist das zumindest eine als eine Verbindungsbuchse ausgebildete elektrische Verbindungselement eine maximale Erstreckung entlang der Längsachse des zumindest einen Verbindungselements auf, welche mindestens 20%, bevorzugt mindestens 30%, einer maximalen Erstreckung der Gehäuseeinheit entlang der Längsachse der Gehäuseeinheit beträgt. Vorzugsweise weist das zumindest eine als eine Verbindungsbuchse ausgebildete Verbindungselement eine maximale Erstreckung senkrecht zu der Längsachse des zumindest einen Verbindungselements auf, welche maximal 20% der maximalen Erstreckung des zumindest einen Verbindungselements entlang der Längsachse des zumindest einen Verbindungselements beträgt. Vorzugsweise weist das zumindest eine als eine Verbindungsbuchse ausgebildete Verbindungselement in einem Querschnitt senkrecht zu der Längsachse des zumindest einen Verbindungselements einen kreisrunden Querschnitt auf, zumindest an einer dem zumindest einen Drahtelement abgewandten Hälfte, bevorzugt an dem zumindest einen Drahtelement abgewandten zwei Dritteln, insbesondere an einer freien Hälfte, bevorzugt an freien zwei Dritteln, des zumindest einen Verbindungselements. Das zumindest eine Verbindungselement kann vorteilhaft vollständig in der Gehäuseeinheit angeordnet werden. Es kann eine vorteilhaft unbewegliche Anordnung des zumindest einen Verbindungselements in der Gehäuseeinheit erreicht werden.

Ferner wird vorgeschlagen, dass das zumindest eine elektrische Verbindungselement als ein Verbindungsfortsatz ausgebildet ist. Vorzugsweise ist das zumindest eine als ein Verbindungsfortsatz ausgebildete elektrische Verbindungselement maximal zu 80%, bevorzugt maximal zu 70%, besonders bevorzugt maximal zu 60%, in der Gehäuseeinheit angeordnet, insbesondere nach Volumen. Vorzugsweise ist das zumindest eine als ein Verbindungsfortsatz ausgebildete elektrische Verbindungselement mindestens zu 20%, bevorzugt mindestens zu 30%, besonders bevorzugt mindestens zu 40%, in der Gehäuseeinheit angeordnet, insbesondere nach Volumen. Vorzugsweise weist das zumindest eine als ein Verbindungsfortsatz ausgebildete elektrische Verbindungselement eine maximale Erstreckung entlang der Längsachse des zumindest einen Verbindungselements auf, welche mindestens 20%, bevorzugt mindestens 30%, einer maximalen Erstreckung der Gehäuseeinheit entlang der Längsachse der Gehäuseeinheit beträgt. Vorzugsweise weist das zumindest eine als ein Verbindungsfortsatz ausgebildete Verbindungselement eine maximale Erstreckung senkrecht zu der Längsachse des zumindest einen Verbindungselements auf, welche maximal 20% der maximalen Erstreckung des zumindest einen Verbindungselements entlang der Längsachse des zumindest einen Verbindungselements beträgt. Das zumindest eine Verbindungselement kann vorteilhaft geschützt an der Gehäuseeinheit angeordnet werden. Es kann eine vorteilhaft unbewegliche Anordnung des zumindest einen Verbindungselements an der Gehäuseeinheit erreicht werden. Insbesondere kann das zumindest eine als ein Verbindungsfortsatz ausgebildete Verbindungselement vorteilhaft witterungsgeschützt angeordnet werden in einem mit einem weiteren, insbesondere als Verbindungsbuchse ausgebildeten, Verbindungselement gekoppelten Zustand.

Des Weiteren wird vorgeschlagen, dass die Leitereinheit an zumindest drei verschiedenen Seiten der Gehäuseeinheit zumindest teilweise außerhalb der Gehäuseeinheit angeordnet ist. Vorzugsweise ragt die Leitereinheit an verschiedenen Seiten der Gehäuseeinheit aus der Gehäuseeinheit hervor, insbesondere jeweils zu einem Ausbilden eines Drahtbügels zu einer Verbindung mit einem Elektrozaunseil. Vorzugsweise ragt ausschließlich das zumindest eine Drahtelement der Leitereinheit an verschiedenen Seiten der Gehäuseeinheit aus der Gehäuseeinheit hervor, insbesondere zu einem Ausbilden jeweils eines Drahtbügels an jeder der zumindest drei Seiten zu einer Verbindung mit einem Elektrozaunseil. Vorzugsweise ist die Leitereinheit, insbesondere das zumindest eine Drahtelement, an zumindest drei verschiedenen Seiten, welche insbesondere in Bezug auf den kleinsten gedachten Quader, welcher die Gehäuseeinheit gerade noch vollständig umschließt, verschiedene Seiten des Quaders sind, der Gehäuseeinheit, zumindest teilweise außerhalb der Gehäuseeinheit angeordnet. Es kann eine vorteilhafte Verbindereinheit für einen Zaunpfahl erreicht werden, welcher in einem Elektrozaun als Grenzzaunpfahl zwischen zwei umzäunten Gebieten dient.

Ferner wird vorgeschlagen, dass die Leitereinheit zumindest ein, insbesondere das bereits genannte, Drahtelement umfasst, welches derart gebogen ausgebildet ist, dass sich das Drahtelement mit einer abschnittsweisen Längserstreckung des Drahtelements parallel zu zumindest drei Koordinatenachsen erstreckt, welche jeweils senkrecht zueinander ausgerichtet sind. Unter einer "Längserstreckung" soll insbesondere eine Erstreckung eines Objekts entlang, insbesondere parallel zu, einer Längsachse des Objekts verstanden werden. Unter einer abschnittsweisen "Längserstreckung" soll insbesondere eine Erstreckung eines Objekts entlang, insbesondere parallel zu, einer Längsachse des entsprechenden Abschnitts des Objekts verstanden werden. Vorzugsweise ist das zumindest eine Drahtelement zumindest teilweise entlang der zentral durch die Gehäuseeinheit verlaufenden Längsachse der Gehäuseeinheit gebogen. Vorzugsweise sind Enden, von insbesondere jeweils mindestens 3% der Gesamtlänge, des zumindest einen Drahtelements entlang der zentral durch die Gehäuseeinheit verlaufenden Längsachse der Gehäuseeinheit gebogen. Vorzugsweise weist das zumindest eine Drahtelement zumindest drei Parallelabschnitte auf, welche voneinander und von Enden des zumindest einen Drahtelements beabstandet sind. Vorzugsweise sind die zumindest drei voneinander beabstandeten und von Enden des zumindest einen Drahtelements beabstandeten Parallelabschnitte des zumindest einen Drahtelements parallel zu der Längsachse der Gehäuseeinheit ausgerichtet, insbesondere gebogen. Vorzugsweise sind die drei Parallelabschnitte vollständig außerhalb der Gehäuseeinheit angeordnet. Vorzugsweise sind zwei Parallelabschnitte an sich gegenüberliegenden Seiten, insbesondere einander um 180° abgewandten Seiten, der Gehäuseeinheit angeordnet, insbesondere in Bezug auf Seiten des kleinsten gedachten Quaders, welcher die Gehäuseeinheit gerade noch vollständig umschließt. Vorzugsweise weist das zumindest eine Drahtelement zumindest sechs Senkrechtabschnitte, mit jeweils einer Längserstreckung senkrecht zu der Längsachse der Gehäuseeinheit auf. Vorzugsweise sind Längsachsen direkt benachbarter Senkrechtabschnitte in Winkeln von 90° zueinander ausgerichtet. Vorzugsweise sind jeweils zwei Senkrechtabschnitte direkt mit jeweils einem Parallelabschnitt verbunden. Vorzugsweise sind direkt mit einem Parallelabschnitt verbundene Senkrechtabschnitte jeweils parallel zueinander ausgerichtet. Vorzugsweise sind vier voneinander beabstandete Senkrechtabschnitte parallel zueinander ausgerichtet, insbesondere in Bezug auf jeweilige Längsachsen. Vorzugsweise erstrecken sich genau zwei Senkrechtabschnitte entlang einer ersten Koordinatenachse, genau vier zueinander parallele Senkrechtabschnitte entlang einer zweiten Koordinatenachse und Enden des zumindest einen Drahtelements sowie die Parallelabschnitte entlang einer dritten Koordinatenachse, wobei alle Koordinatenachsen insbesondere senkrecht zueinander ausgerichtet sind. Es kann eine vorteilhafte elektrische Anbindung von Elektrozaunseilen erreicht werden, welche dazu ausgebildet, insbesondere angeordnet sind, zwei umzäunte Gebiete voneinander zu trennen.

Des Weiteren wird vorgeschlagen, dass die elektrische Leitereinheit zumindest zwei elektrische Verbindungselemente umfasst, welche zumindest zum Großteil in der Gehäuseeinheit an zwei einander abgewandten Seiten der Gehäuseeinheit angeordnet sind. Vorzugsweise sind die zumindest zwei Verbindungselemente gleich, insbesondere groß und/oder geformt, ausgebildet. Vorzugsweise sind die zumindest zwei Verbindungselemente als Verbindungsbuchsen ausgebildet. Die zumindest zwei Verbindungselemente können als Verbindungsfortsätze ausgebildet sein. Vorzugsweise sind die zumindest zwei Verbindungselemente in verschiedene Richtungen ausgerichtet, insbesondere in Bezug auf Anschlussrichtungen der Verbindungselemente. Vorzugsweise sind die zumindest zwei Verbindungselemente in einer Flucht zueinander angeordnet. Vorzugsweise sind die Anschlussrichtungen der zumindest zwei Verbindungselemente parallel zu der Längsachse der Gehäuseeinheit ausgerichtet. Die zumindest zwei Verbindungselemente können teilweise als Verbindungsbuchse und als Verbindungsfortsatz ausgebildet sein. Es kann eine vorteilhaft unkomplizierte Verbindereinheit für mittlere Elektrozaunseile in Bezug auf eine Höhe der Elektrozaunseile erreicht werden.

Ferner wird vorgeschlagen, dass die Gehäuseeinheit eine erste Gehäuseplatte und zumindest eine weitere Gehäuseplatte aufweist. Vorzugsweise sind die erste Gehäuseplatte und die zumindest eine weitere Gehäuseplatte zumindest im Wesentlichen gleich groß ausgebildet sind. Vorzugsweise weisen die erste Gehäuseplatte und die zumindest eine weitere Gehäuseplatte jeweils eine zu einer Aufnahme der Leitereinheit strukturierte Innenseite auf. Vorzugsweise bilden die erste Gehäuseplatte und die zumindest eine weitere Gehäuseplatte die genau zwei Gehäuseteile. Vorzugsweise weist die weitere Gehäuseplatte eine Parallelausnehmung auf, welche eine Längsachse aufweist, welche parallel zu der Längsachse der Gehäuseeinheit ausgerichtet ist. Vorzugsweise ist die Parallelausnehmung dazu ausgebildet, einen mittleren der drei Parallelabschnitte des zumindest einen Drahtelements aus der Gehäuseeinheit ragen zu lassen. Vorzugsweise weisen die erste Gehäuseplatte und die zumindest eine weitere Gehäuseplatte jeweils zwei Senkrechtnuten auf, welche sich senkrecht zur Längsachse der Gehäuseeinheit über die gesamte jeweilige Gehäuseplatte erstrecken, insbesondere zu einer zumindest teilweisen Aufnahme der Senkrechtabschnitte des zumindest einen Drahtelements. Es kann eine vorteilhaft robuste Gehäuseeinheit erreicht werden.

Des Weiteren wird vorgeschlagen, dass jedes elektrische Verbindungselement zu einer Bananenverbindung ausgebildet ist. Vorzugsweise sind alle als Verbindungsfortsatz ausgebildeten Verbindungselemente als Bananenstecker, 4-mm Federstecker und/oder Lamellenstecker ausgebildet. Vorzugsweise sind alle als Verbindungsbuchse ausgebildeten Verbindungselemente als Bananenbuchse ausgebildet, welche einen Innendurchmesser von 4 mm aufweist. Es kann eine vorteilhaft unkomplizierte und/oder schnelle elektrische Verbindung erreicht werden, insbesondere zwischen Verbindereinheiten. Es ist jedoch auch denkbar, dass die als Verbindungsfortsatz ausgebildeten Verbindungselemente eine andere, einem Fachmann als sinnvoll erscheinende Ausgestaltung aufweisen, wie beispielsweise eine Ausgestaltung als Flachstecker, als Rundstecker o. dgl. Es ist auch denkbar, dass die als Verbindungsbuchse ausgebildeten Verbindungselemente eine andere, einem Fachmann als sinnvoll erscheinende Ausgestaltung aufweisen, wie beispielsweise eine Ausgestaltung als Flachsteckhülse, als Rundsteckhülse o. dgl.

Darüber hinaus wird ein Elektroconnectorsystem vorgeschlagen für einen Elektrozaun, mit zumindest zwei erfindungsgemäßen Elektroconnectorvorrichtungen.

Es wird vorgeschlagen, dass das Elektroconnectorsystem zumindest eine Verbinderkoppeleinheit zu einem elektrischen Verbinden zumindest zweier Verbindereinheiten umfasst, welche eine elektrische Leitereinheit und eine Gehäuseeinheit umfasst, wobei die elektrische Leitereinheit zumindest zwei elektrische Verbindungselemente umfasst, welche zumindest teilweise außerhalb der Gehäuseeinheit auf zwei einander abgewandten Seiten der Gehäuseeinheit angeordnet sind.

Vorzugsweise weist die elektrische Leitereinheit der zumindest einen Verbinderkoppeleinheit zumindest zwei als Verbindungsfortsatz, insbesondere Bananenstecker, ausgebildete Verbindungselemente auf. Vorzugsweise sind die zumindest zwei Verbindungselemente der Leitereinheit der zumindest einen Verbinderkoppeleinheit in einer Flucht zueinander an verschiedenen einander um 180° abgewandten Seiten der Gehäuseeinheit der zumindest einen Verbinderkoppeleinheit angeordnet. Vorzugsweise sind die zumindest zwei Verbindungselemente der Leitereinheit der zumindest einen Verbinderkoppeleinheit gleich ausgebildet. Vorzugsweise weist die Leitereinheit der Verbinderkoppeleinheit zumindest ein Drahtelement auf, welches als ein gerader Draht ausgebildet ist und welches insbesondere mit den zumindest zwei Verbindungselementen, insbesondere durch eine schraub- und/oder verformungsgesicherte Verbindung verbunden ist. Vorzugsweise sind die Verbindungselemente der Leitereinheit der zumindest einen Verbinderkoppeleinheit zu einer Verbindung mit den Verbindungselementen der zumindest zwei Verbindereinheiten ausgebildet, insbesondere zu den Verbindungselementen der zumindest zwei Verbindereinheiten korrespondierend geformt ausgebildet. Vorzugsweise ist die Gehäuseeinheit der Verbinderkoppeleinheit länglich geformt ausgebildet. Vorzugsweise ist eine maximale Erstreckung der Gehäuseeinheit der Verbinderkoppeleinheit entlang einer Längsachse der Gehäuseeinheit mindestens dreimal, bevorzugt mindestens viermal, besonders bevorzugt mindestens fünfmal, so groß wie eine maximale Erstreckung der Gehäuseeinheit der Verbinderkoppeleinheit senkrecht zu der Längsachse der Gehäuseeinheit. Vorzugsweise ist die Gehäuseeinheit an Enden entlang der Längsachse der Gehäuseeinheit A-förmig Spitz zulaufend ausgebildet. Vorzugsweise ist die Gehäuseeinheit der Verbinderkoppeleinheit an Enden entlang der Längsachse der Gehäuseeinheit der Verbinderkoppeleinheit in V-förmigen Vertiefungen der Verbindereinheiten genau passend geformt ausgebildet. Es kann eine vorteilhaft witterungsbeständige elektrische Verbindung der Bauteile des Elektroconnectorsystems erreicht werden.

Des Weiteren wird vorgeschlagen, dass zumindest zwei Verbindereinheiten durch die zumindest eine Verbinderkoppeleinheit an jeweiligen elektrischen Verbindungselementen miteinander verbunden sind, wobei die elektrischen Verbindungselemente vollständig in den Gehäuseeinheiten der zumindest zwei Verbindereinheiten und der Verbinderkoppeleinheit angeordnet sind. Vorzugsweise sind außerhalb der jeweiligen Gehäuseeinheit angeordnete Abschnitte der als Steckfortsätze, insbesondere Bananenstecker, ausgebildeten Verbindungselemente vollständig in den als Steckerbuchsen, insbesondere Bananenbuchsen, ausgebildeten Verbindungselementen angeordnet zu einem Ausbilden einer Verbindung der zumindest zwei Verbindereinheiten mit der zumindest einen Verbinderkoppeleinheit. Vorzugsweise schließen die Gehäuseeinheiten der zumindest zwei Verbindereinheiten und der zumindest einen Verbinderkoppeleinheit an den jeweiligen Verbindungselementen bündig ab zu einem vollständigen Umschließen der Verbindungselemente bei einem Ausbilden einer Verbindung der zumindest zwei Verbindereinheiten mit der zumindest einen Verbinderkoppeleinheit. Es kann ein vorteilhaft langlebiges Elektroconnectorsystem an einem Zaunpfahl angebracht werden, wobei das Elektroconnectorsystem individuell für verschiedene Elektrozaunbedürfnisse als Baukastensystem vorteilhaft anpassbar ist.

Ferner wird eine Zubehörvorrichtung für eine erfindungsgemäße Elektroconnectorvorrichtung oder für ein erfindungsgemäßes Elektroconnectorsystem, mit zumindest einer Pfahlverbindungseinheit zu einer Verbindung der Gehäuseeinheit mit einem Zaunpfahl, vorgeschlagen. Die Zubehörvorrichtung kann ein Teil des Elektroconnectorsystems bilden oder als separate Vorrichtung ausgebildet sein. Die Pfahlverbindungseinheit, insbesondere zumindest ein Gehäuseverbindungselement der Pfahlverbindungseinheit, ist vorzugsweise lösbar mit der Gehäuseeinheit verbindbar. Bevorzugt ist die Pfahlverbindungseinheit mittels einer form- und/oder kraftschlüssigen Verbindung, wie beispielsweise mittels einer Schraubverbindung, mittels einer Klemmverbindung, mittels einer Rastverbindung, mittels einer Kombination aus einer der bereits genannten Verbindungen oder mittels einer anderen, einem Fachmann als sinnvoll erscheinenden Verbindung lösbar mit der Gehäuseeinheit verbindbar. Vorzugsweise ist die Pfahlverbindungseinheit dazu vorgesehen, eine Verbindungsmöglichkeit der Gehäuseeinheit mit Zaunpfählen zu realisieren, die unterschiedliche Grundformen oder Außenformen aufweisen, oder eine Verbindungsmöglichkeit der Gehäuseeinheit zu realisieren, bei der die Gehäuseeinheit mit einem Abstand, insbesondere größer als 20 mm, relativ zum Zaunpfahl am Zaunpfahl angeordnet ist. Die Pfahlverbindungseinheit umfasst bevorzugt zumindest das Gehäuseverbindungselement, das zu einer Anordnung an der Gehäuseeinheit vorgesehen ist. Vorzugsweise weist das Gehäuseverbindungselement eine Schnittstelle auf, die korrespondierend mit dem Verbindungsmittel der Gehäuseeinheit ausgebildet ist, insbesondere um eine Befestigung des Gehäuseverbindungselements an der Gehäuseeinheit zu ermöglichen. Das Gehäuseverbindungselement umfasst vorzugsweise zumindest eine Abstandshalterverbindungsschnittstelle und/oder eine Zaunpfahlverbindungsschnittstelle. Bei einer Ausgestaltung des Gehäuseverbindungselements mit einer Abstandshalterverbindungsschnittstelle ist die Abstandshalterverbindungsschnittstelle zu einer Verbindung mit einem Abstandshalter, wie beispielsweise einer Stange, einem Stab, einer Strebe o. dgl., der Pfahlverbindungseinheit vorgesehen. Vorzugsweise ist die Abstandshalterverbindungsschnittstelle als Aufnahme, wie beispielsweise als Hülse o. dgl., ausgebildet, in die der Abstandshalter einsteckbar ist. Es ist jedoch auch denkbar, dass die Abstandshalterverbindungsschnittstelle eine andere, einem Fachmann als sinnvoll erscheinende Ausgestaltung aufweist, wie beispielsweise als Gewinde, als Fortsatz o. dgl. Denkbar ist auch, dass eine elektrische Verbindung über den Abstandshalter und die Abstandshalterverbindungsschnittstelle erzeugbar ist, insbesondere um eine elektrische Verbindung der Leitereinheit mit einer Leitereinheit einer weiteren Elektroconnectorvorrichtung zu ermöglichen. Bei einer Ausgestaltung des Gehäuseverbindungselements mit einer Abstandshalterverbindungsschnittstelle umfasst die Pfahlverbindungseinheit bevorzugt zumindest ein Pfahlverbindungselement, das eine mit einer Grundform oder Außenform des Zaunpfahls korrespondierende Zaunpfahlverbindungsschnittstelle und zumindest eine Abstandshalterverbindungsschnittstelle zu einer Verbindung mit dem Abstandshalter aufweist. Bei einer Ausgestaltung des Gehäuseverbindungselements ohne Abstandshalterverbindungsschnittstelle, insbesondere zu einer Ermöglichung einer Verbindung der Gehäuseeinheit mit Zaunpfählen, die unterschiedliche Grundformen oder Außenformen aufweisen, umfasst das Gehäuseverbindungselement eine Anordnungsschnittstelle zu einer Anordnung des Pfahlverbindungselements an dem Gehäuseverbindungselement. Es ist denkbar, dass in zumindest einer Ausgestaltung der Pfahlverbindungseinheit das Gehäuseverbindungselement einteilig mit dem Pfahlverbindungselement ausgebildet ist, dass das Gehäuseverbindungselement lösbar mit dem Pfahlverbindungselement verbindbar ist oder dass das Gehäuseverbindungselement lösbar mit der Abstandshalterverbindungsschnittstelle verbindbar ist, insbesondere mittels einer form- und/oder kraftschlüssigen Verbindung lösbar verbindbar ist. Weitere, einem Fachmann als sinnvoll erscheinende Ausgestaltungen der Pfahlverbindungseinheit zu einer Realisierung der oben genannten Verbindungsmöglichkeiten der Gehäuseeinheit mit Zaunpfählen sind ebenfalls denkbar. Das Pfahlverbindungselement umfasst vorzugsweise eine Zaunpfahlverbindungsschnittstelle, mittels derer das Pfahlverbindungselement an dem Zaunpfahl anordenbar ist, insbesondere an dem Zaunpfahl fixierbar ist. Die Zaunpfahlverbindungsschnittstelle kann als Klemmschnittstelle, als Rastschnittstelle, als Schraubschnittstelle o. dgl., ausgebildet sein. Die Zaunpfahlverbindungsschnittstelle weist vorzugsweise eine mit der Grundform oder mit der Außenform korrespondierende Ausgestaltung auf, wie beispielsweise eine konvexe Anlagefläche zu einer Anordnung an einem Zaunpfahl mit einer runden oder elliptischen Querschnittsform, eine T-förmige Anlage- und Klemmausnehmung zu einer Anordnung an einem Zaunpfahl mit einer T-förmigen Querschnittsform oder eine andere, einem Fachmann als sinnvoll erscheinende Ausgestaltung. Mittels der erfindungsgemäßen Ausgestaltung kann vorteilhaft eine große Vielzahl an Anordnungsmöglichkeiten der Elektroconnectorvorrichtung und/oder des Elektroconnectorsystems realisiert werden. Es kann vorteilhaft ein Baukastensystem für die Elektroconnectorvorrichtung und/oder das Elektroconnectorsystem realisiert werden. Es kann vorteilhaft ein flexibles Einsatzgebiet für die Elektroconnectorvorrichtung und/oder für das Elektroconnectorsystem ermöglicht werden.

Die erfindungsgemäße Elektroconnectorvorrichtung, das erfindungsgemäße Elektroconnectorsystem und/oder die erfindungsgemäße Zubehörvorrichtung sollen/soll hierbei nicht auf die oben beschriebene Anwendung und Ausführungsform beschränkt sein. Insbesondere können/kann die erfindungsgemäße Elektroconnectorvorrichtung, das erfindungsgemäße Elektroconnectorsystem und/oder die erfindungsgemäße Zubehörvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Elektroconnectorsystem mit drei erfindungsgemäßen Elektroconnectorvorrichtungen in einer schematischen Explosionsdarstellung,
- Fig. 2: das erfindungsgemäße Elektroconnectorsystem in einer weiteren schematischen Darstellung,
- Fig. 3: eine erfindungsgemäße Elektroconnectorvorrichtung der erfindungsgemäßen Elektroconnectorvorrichtungen in einer schematischen Darstellung,
- Fig. 4: eine erfindungsgemäße Elektroconnectorvorrichtung der erfindungsgemäßen Elektroconnectorvorrichtungen in einer schematischen Darstellung,
- Fig. 5: eine Verbinderkoppeleinheit in einer schematischen Darstellung,
- Fig. 6: eine Anordnung des erfindungsgemäßen Elektroconnectorsystems an einem Zaunpfahl, wobei ein Teil des erfindungsgemäßen Elektroconnectorsystems mittels einer erfindungsgemäßen Zubehörvorrichtung an dem Zaunpfahl angeordnet ist, in einer schematischen Darstellung,
- Fig. 7: eine Detailansicht einer Gehäuseeinheit einer Verbindereinheit der erfindungsgemäßen Elektroconnectorvorrichtung, an der ein Teil der erfindungsgemäßen Zubehörvorrichtung angeordnet ist, in einer schematischen Darstellung,
- Fig. 8: eine Detailansicht eines an einem Zaunpfahl befestigbaren weiteren Teils der erfindungsgemäßen Zubehörvorrichtung, das mit der Gehäuseeinheit der erfindungsgemäßen Elektroconnectorvorrichtung oder mit dem Teil der erfindungsgemäßen Zubehörvorrichtung verbindbar ist, in einer schematischen Darstellung und
- Fig. 9: eine Detailansicht einer alternativen Ausgestaltung des weiteren Teils der erfindungsgemäßen Zubehörvorrichtung, das an der Gehäuseeinheit der erfindungsgemäßen Elektroconnectorvorrichtung angeordnet ist, in einem an einem alternativen Zaunpfahl angeordneten Zustand, in einer schematischen Darstellung.

### Beschreibung des Ausführungsbeispiels

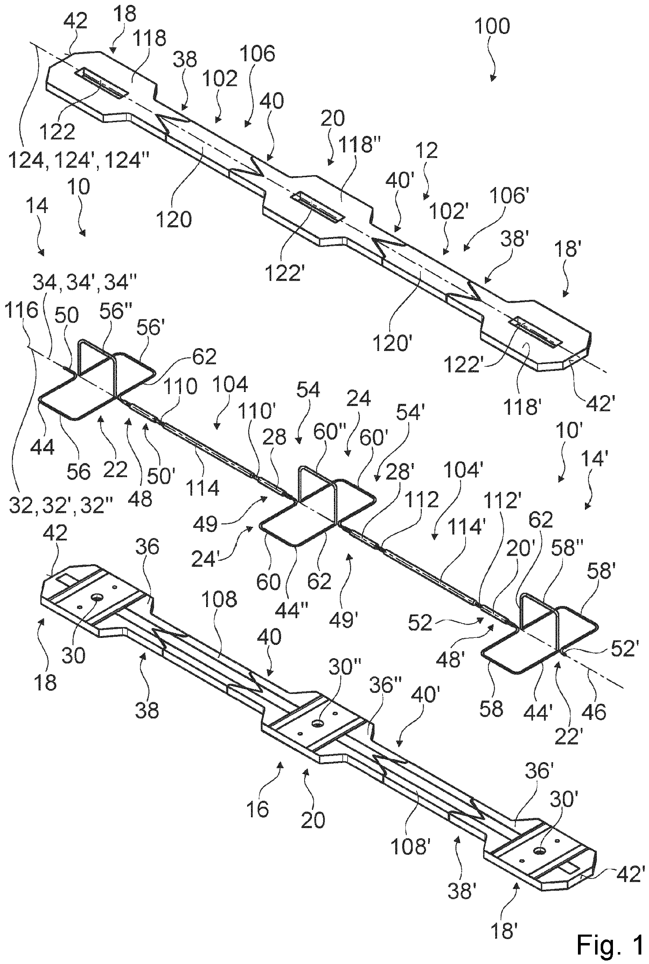

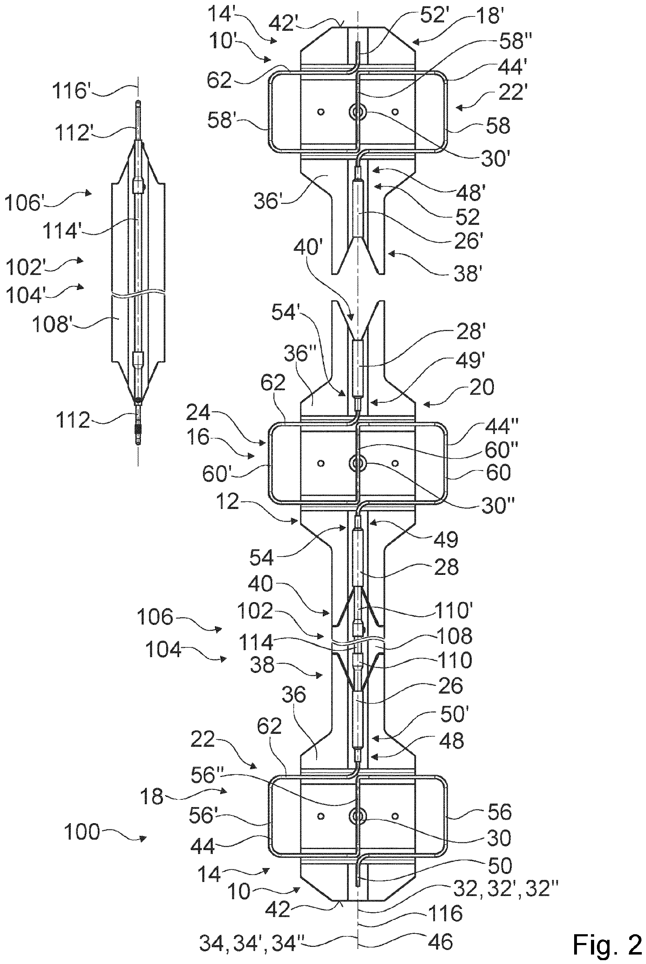

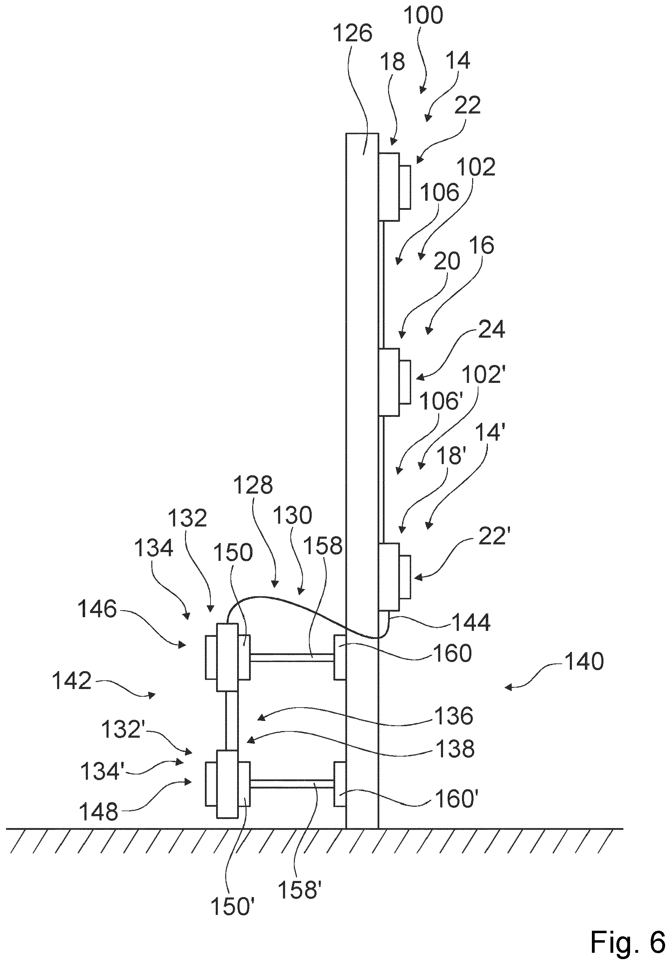

Fig. 1 und 2 zeigen ein Elektroconnectorsystem 100. Das Elektroconnectorsystem 100 ist für einen Elektrozaun ausgebildet. Das Elektroconnectorsystem 100 umfasst drei Elektroconnectorvorrichtungen 10, 10', 12. Die Elektroconnectorvorrichtungen 10, 10', 12 sind für den Elektrozaun ausgebildet. Die Elektroconnectorvorrichtungen 10, 10', 12 umfassen jeweils eine Verbindereinheit 14, 14', 16. Die Verbindereinheiten 14, 14', 16 sind zu einem Verbinden eines Zaunpfahls 126 (vgl. bspw. Figur 6) mit einem Elektrozaunseil ausgebildet.

Das Elektroconnectorsystem 100 weist in dem in den Figuren dargestellten Ausführungsbeispiel beispielhaft zwei Verbinderkoppeleinheiten 102, 102' auf. Die Verbinderkoppeleinheiten 102, 102' sind zu einem elektrischen Verbinden jeweils zweier Verbindereinheiten 14, 14, 16' ausgebildet. Das Elektroconnectorsystem 100 ist hinsichtlich einer Anzahl der einzelnen Vorrichtungen und/oder Einheiten beliebig erweiterbar, so dass sich vorzugsweise eine Art Baukastensystem ergibt, das an unterschiedliche Begebenheiten anpassbar ist, insbesondere in Bezug auf eine Gesamtlänge des Zaunpfahls 126 oder eines vertikalen Abstands von einzelnen Elektrozaunseilen.

Die Verbindereinheiten 14, 14', 16 umfassen jeweils eine Gehäuseeinheit 18, 18', 20 und eine elektrische Leitereinheit 22, 22', 24. Die elektrischen Leitereinheiten 22, 22', 24 umfassen jeweils mindestens ein elektrisches Verbindungselement 26, 26', 28, 28'. Die elektrischen Verbindungselemente 26, 26', 28, 28' sind jeweils zumindest zum Großteil in der jeweiligen Gehäuseeinheit 18, 18', 20 angeordnet. Die Elektroconnectorvorrichtungen 10, 10', 12 sind Unterbaugruppen des Elektroconnectorsystems 100. Das Elektroconnectorsystem 100 ist hier beispielhaft eine Unterbaugruppe eines Elektrozauns für genau einen Zaunpfahl 126.

Die Elektroconnectorvorrichtungen 10, 10', 12 sind zu einem Einsatz als Teil des Elektrozauns ausgebildet. Die Elektroconnectorvorrichtungen 10, 10', 12 sind, insbesondere als Teil des Elektrozauns, zu einer Befestigung von Elektrozaunseilen, insbesondere Elektrozaunbändern, an dem Zaunpfahl 126 ausgebildet.

Die Elektroconnectorvorrichtungen 10, 10', 12 sind in einem Betriebszustand mit dem Zaunpfahl 126 des Elektrozauns gekoppelt, insbesondere verbunden, wie beispielsweise verschraubt.

Im Folgenden werden die Gehäuseeinheit 18, 18', 20 und die Leitereinheit 22, 22', 24 generisch für alle Verbindereinheiten 14, 14', 16 beschrieben.

Die Gehäuseeinheit 18, 18', 20 ist dazu ausgebildet, die elektrische Leitereinheit 22, 22', 24 zumindest teilweise elektrisch zu isolieren. Insbesondere ist die Gehäuseeinheit 18, 18', 20 dazu ausgebildet, die Leitereinheit 22, 22', 24 zumindest zum Großteil zu umschließen, insbesondere gemessen an einer Außenfläche der Leitereinheit 22, 22', 24.

Die Gehäuseeinheit 18, 18', 20 ist zu einem einseitigen Verbinden mit dem Zaunpfahl 126 ausgebildet. Die Gehäuseeinheit 18, 18', 20 weist an einer Außenseite, bevorzugt an einer größten Außenseite der Gehäuseeinheit 18, 18', 20, ein Verbindungsmittel 30, 30', 30" auf, hier beispielsweise eine Verbindungsausnehmung für einer Schraubverbindung, insbesondere zu der Verbindung mit dem Zaunpfahl 126.

Insbesondere ist die Gehäuseeinheit 18, 18', 20 vollständig aus einem elektrischen Isolator, bevorzugt einem Kunststoff, ausgebildet. Die Gehäuseeinheit 18, 18', 20 weist eine Längsachse 32, 32', 32" auf, welche parallel zu einer Längsachse 34, 34', 34" der Leitereinheit 22, 22', 24 ausgerichtet ist. Die Gehäuseeinheit 18, 18', 20 umfasst genau zwei Gehäuseteile, welche bis auf maximale Abweichungen von 10% nach Volumen gleich groß ausgebildet sind und welche entlang der Längsachse 32, 32', 32" der Gehäuseeinheit 18, 18', 20 miteinander verbindbar, insbesondere verbunden, sind. Insbesondere sind die zwei Gehäuseteile miteinander verbunden, wie beispielsweise stoffschlüssig miteinander verbunden, miteinander verrastet, verklebt, verschraubt und/oder verclippt.

Die Gehäuseeinheit 18, 18', 20 weist eine erste Gehäuseplatte 36, 36', 36" und eine weitere Gehäuseplatte 118, 118', 118" auf. Die erste Gehäuseplatte 36, 36', 36" und die weitere Gehäuseplatte 118, 118', 118" sind gleich groß ausgebildet. Die erste Gehäuseplatte 36, 36', 36" und die weitere Gehäuseplatte 118, 118', 118" weisen jeweils eine zu einer Aufnahme der Leitereinheit 22, 22', 24 strukturierte Innenseite auf. Die erste Gehäuseplatte 36, 36', 36" und die weitere Gehäuseplatte 118, 118', 118" bilden die genau zwei Gehäuseteile.

Bevorzugt umfasst die Gehäuseeinheit 18, 18', 20 eine Verbindungsschnittstelle zu einer lösbaren Verbindung mit zumindest einer korrespondierenden Verbindungsschnittstelle einer Verbinderkoppeleinheit 102, 102' oder einer Gehäuseeinheit 18, 18', 20 einer weiteren Elektroconnectorvorrichtung 10, 10', 12. Die Verbindungsschnittstelle ist bevorzugt zu einer form- und/oder kraftschlüssigen Verbindung mit der korrespondierenden Verbindungsschnittstelle der Verbinderkoppeleinheit 102, 102' oder der weiteren Elektroconnectorvorrichtung 10, 10', 12 vorgesehen. Insbesondere ist die Verbindungsschnittstelle als eine Rastverbindungsschnittstelle ausgebildet. Die Verbindungsschnittstelle umfasst vorzugsweise zumindest einen federelastischen Rastfortsatz (hier nicht näher dargestellt), der zu einem Eingriff in eine Rastausnehmung (hier nicht näher dargestellt) der korrespondierenden Verbindungsschnittstelle vorgesehen ist, oder die Verbindungsschnittstelle umfasst zumindest eine Rastausnehmung (hier nicht näher dargestellt) zu einer Verbindung mit einem federelastischen Rastfortsatz (hier nicht näher dargestellt) der korrespondierenden Verbindungsschnittstelle. Bevorzugt ist die Verbindungsschnittstelle als steckbare Verbindungsschnittstelle ausgebildet. Insbesondere weist die Verbindungsschnittstelle eine Ausgestaltung auf, wie dies beispielsweise bei Schnallen an einem Hüftgurt von Rucksäcken oder bei Verschlüssen von Taschen oder von Rucksäcken einem Fachmann bereits bekannt ist. Bevorzugt umfasst die Verbindungsschnittstelle zumindest zwei Rastausnehmungen oder zumindest zwei parallel zueinander ausgerichtete federelastische Rastfortsätze. Bei einer Ausgestaltung der Verbindungsschnittstelle mit einem federelastischen Rastfortsatz ist dieser Rastfortsatz bevorzugt in die Rastausnehmung der korrespondierenden Verbindungsschnittstelle einsteckbar. Bei einer Ausgestaltung der Verbindungsschnittstelle mit einer Rastausnehmung ist der Rastfortsatz der korrespondierenden Verbindungsschnittstelle in diese Rastausnehmung einsteckbar. In der in den Figuren dargestellten beispielhaften Ausführung des Elektroconnectorsystems 100 umfasst die Gehäuseeinheit 18, 18', 20 an zumindest einem Ende der Gehäuseeinheit 18, 18', 20 entlang der Längsachse 32, 32', 32" der Gehäuseeinheit 18, 18', 20 eine V-förmige Vertiefung 38, 38', 40, 40',die die Verbindungsschnittstelle bildet oder an der die Verbindungsschnittstelle angeordnet ist. Die Ausgestaltung der Verbindungsschnittstelle ist jedoch nicht auf die hier dargestellte Ausgestaltung mit der V-förmigen Vertiefung 38, 38', 40, 40' beschränkt, sondern ist lediglich beispielhaft für eine mögliche Ausgestaltung der Verbindungsschnittstelle dargestellt. Die Gehäuseeinheit 18, 18' der äußeren Verbindereinheiten 14, 14' weist an einem Ende der Gehäuseeinheit 18, 18' entlang der Längsachse 32, 32' der Gehäuseeinheit 18, 18' eine V-förmige Vertiefung 38, 38' auf. Die Gehäuseeinheit 18, 18' der äußeren Verbindereinheiten 14, 14' weist an einem Ende der Gehäuseeinheit 18, 18' entlang der Längsachse 32, 32' der Gehäuseeinheit 18, 18' eine zu der Längsachse 32, 32" senkrechte Außenfläche 42, 42' auf.

Die Gehäuseeinheit 20 der mittleren Verbindereinheit 16 weist an beiden Enden der Gehäuseeinheit 20 entlang der Längsachse 32" der Gehäuseeinheit 20 je eine Verbindungsschnittstelle auf, die hier beispielhaft als V-förmige Vertiefung 40, 40' ausgebildet ist. Die V-förmige Vertiefung 38, 38', 40, 40' ist an einem der Verbindungselemente 26, 26', 28, 28' angeordnet. Die V-förmige Vertiefung 38, 38', 40, 40' ist symmetrisch, insbesondere spiegelsymmetrisch, um die Längsachse 32, 32', 32" der Gehäuseeinheit 18, 18', 20 ausgebildet. Insbesondere ist die V-förmige Vertiefung 38, 38', 40, 40' dazu ausgebildet, ein weiteres, insbesondere zu der jeweiligen Verbindereinheit 14, 14', 16 externes, Verbindungselement 110, 110', 112, 112' zu dem zumindest einen Verbindungselement 26, 26', 28, 28' der Verbindereinheit 14, 14', 16 zu führen. Schenkel der V-förmigen Vertiefung 38, 38', 40, 40' bilden einen 20° Winkel mit der Längsachse 32, 32', 32" der Gehäuseeinheit 18, 18', 20.

Die elektrische Leitereinheit 22, 22', 24 umfasst ein Drahtelement 44, 44', 44", welches bei Raumtemperatur elektrisch leitfähig ausgebildet ist. Insbesondere ist das Drahtelement 44, 44', 44" aus einem Metallmaterial ausgebildet, wie beispielsweise Kupfer, Eisen, Aluminium und/oder einer Legierung ausgebildet. Insbesondere weist das Drahtelement 44, 44', 44" eine maximale Erstreckung entlang der Längsachse 32, 32', 32" der Gehäuseeinheit 18, 18', 20 auf, welche zumindest 60% einer maximalen Erstreckung der Gehäuseeinheit 18, 18', 20 entlang der Längsachse 32, 32', 32" der Gehäuseeinheit 18, 18', 20 beträgt.

Insbesondere ist das Drahtelement 44, 44', 44" zumindest zum Großteil in der Gehäuseeinheit 18, 18', 20 angeordnet. Das Drahtelement 44, 44', 44" ist zumindest teilweise aus einem anderen Material als das elektrische Verbindungselement 26, 26', 28, 28' ausgebildet. Das Drahtelement 44, 44', 44" und die Gehäuseeinheit 18, 18', 20 sind zusammen dazu ausgebildet, zumindest ein Elektrozaunseil mit dem Zaunpfahl 126 zu verbinden.

Das Verbindungselement 26, 26', 28, 28' ist dazu ausgebildet, eine Verbindereinheit 14, 14', 16 mit einer weiteren Verbindereinheit 14, 14', 16 elektrisch zu verbinden. Das Drahtelement 44, 44', 44" ist zu einer direkten Verbindung mit zumindest einem Elektrozaunseil, insbesondere zumindest zwei und/oder zumindest drei Elektrozaunseilen, ausgebildet, insbesondere speziell geformt und an der Gehäuseeinheit 18, 18', 20 angeordnet. Das Verbindungselement 26, 26', 28, 28' ist direkt, insbesondere unmittelbar, mit dem Drahtelement 44, 44', 44", insbesondere elektrisch leitend, verbunden, bevorzugt durch eine schraub- und/oder verformungsgesicherte Steckverbindung.

Insbesondere weist das zumindest eine Verbindungselement 26, 26', 28, 28' in einem Querschnitt senkrecht zu einer Längsachse 46 des zumindest einen Verbindungselements 26, 26', 28, 28' eine Außenkontur auf, welche größer ist als eine Außenkontur des Drahtelements 44, 44', 44" in einem Bereich 48, 48', 49, 49' direkt an dem zumindest einen Verbindungselement 26, 26', 28, 28' in einem Querschnitt senkrecht zu einer Längsachse 34, 34', 34" des Drahtelements 44, 44', 44" in dem ungebogenen Bereich 48, 48', 49, 49' direkt an dem zumindest einen Verbindungselement 26, 26', 28, 28'.

Das Verbindungselement 26, 26', 28, 28' ist zumindest zu 55% in der Gehäuseeinheit 18, 18', 20 angeordnet, insbesondere gemessen anhand einer maximalen Erstreckung des Verbindungselements 26, 26', 28, 28' entlang einer Längsachse 32, 32', 32" des Verbindungselements 26, 26', 28, 28'. Insbesondere ist die Längsachse 46 des zumindest einen Verbindungselements 26, 26', 28, 28' parallel zu der Längsachse 32, 32', 32" der Gehäuseeinheit 18, 18', 20.

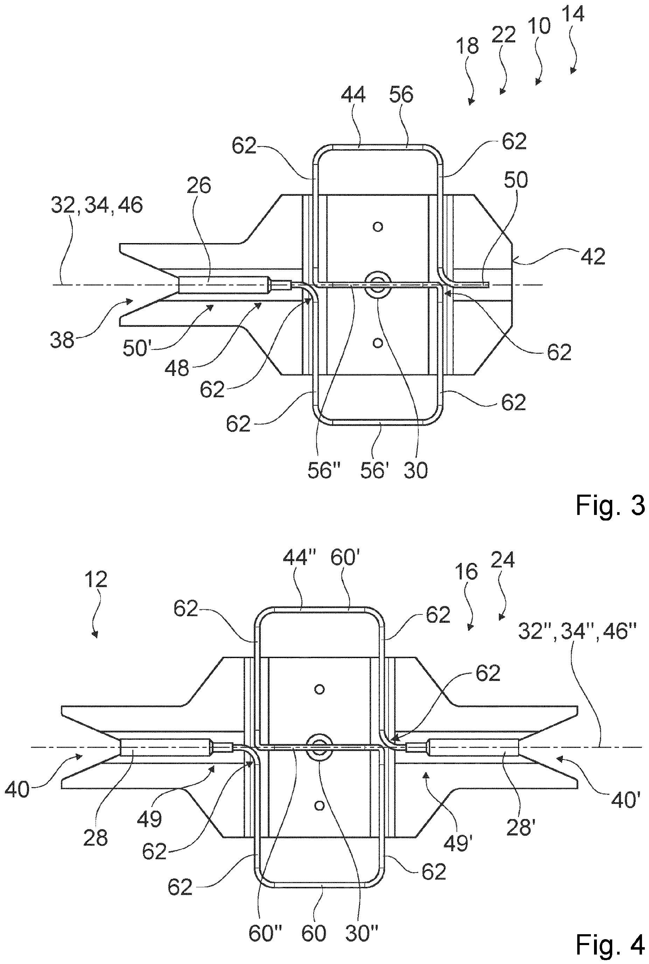

Das zumindest eine elektrische Verbindungselement 26, 26', 28, 28' ist als eine Verbindungsbuchse ausgebildet (vgl. Fig. 2 bis 4). Insbesondere ist das zumindest eine als eine Verbindungsbuchse ausgebildete elektrische Verbindungselement 26, 26', 28, 28' zumindest zu 90% in der Gehäuseeinheit 18, 18', 20 angeordnet, insbesondere nach Volumen. Insbesondere ist das zumindest eine als eine Verbindungsbuchse ausgebildete elektrische Verbindungselement 26, 26', 28, 28' vollständig in der Gehäuseeinheit 18, 18', 20 angeordnet.

Das zumindest eine als eine Verbindungsbuchse ausgebildete elektrische Verbindungselement 26, 26', 28, 28' weist eine maximale Erstreckung entlang der Längsachse 46 des zumindest einen Verbindungselements 26, 26', 28, 28' auf, welche mindestens 20% einer maximalen Erstreckung der Gehäuseeinheit 18, 18', 20 entlang der Längsachse 32, 32', 32" der Gehäuseeinheit 18, 18', 20 beträgt. Insbesondere weist das zumindest eine als eine Verbindungsbuchse ausgebildete Verbindungselement 26, 26', 28, 28' eine maximale Erstreckung senkrecht zu der Längsachse 46 des zumindest einen Verbindungselements 26, 26', 28, 28' auf, welche maximal 20% der maximalen Erstreckung des zumindest einen Verbindungselements 26, 26', 28, 28' entlang der Längsachse 46 des zumindest einen Verbindungselements 26, 26', 28, 28' beträgt.

Das zumindest eine als eine Verbindungsbuchse ausgebildete Verbindungselement 26, 26', 28, 28' weist in einem Querschnitt senkrecht zu der Längsachse 46 des zumindest einen Verbindungselements 26, 26', 28, 28' einen kreisrunden Querschnitt auf, zumindest an einer dem zumindest einen Drahtelement 44, 44', 44" abgewandten Hälfte, insbesondere an dem zumindest einen Drahtelement 44, 44', 44" abgewandten zwei Dritteln, insbesondere an einer freien, insbesondere in Bezug auf das Drahtelement 44, 44', 44", Hälfte, bevorzugt an freien zwei Dritteln, des zumindest einen Verbindungselements 26, 26', 28, 28'.

Die Leitereinheit 22, 22', 24 ist an drei verschiedenen Seiten der Gehäuseeinheit 18, 18', 20 zumindest teilweise außerhalb der Gehäuseeinheit 18, 18', 20 angeordnet. Insbesondere ragt die Leitereinheit 22, 22', 24 an verschiedenen Seiten der Gehäuseeinheit 18, 18', 20 aus der Gehäuseeinheit 18, 18', 20 hervor, insbesondere jeweils zu einem Ausbilden eines Drahtbügels zu einer Verbindung mit zumindest einem Elektrozaunseil. Insbesondere ragt ausschließlich das zumindest eine Drahtelement 44, 44', 44" der Leitereinheit 22, 22', 24 an verschiedenen Seiten der Gehäuseeinheit 18, 18', 20 aus der Gehäuseeinheit 18, 18', 20 hervor, insbesondere zu einem Ausbilden jeweils eines Drahtbügels an jeder der drei Seiten zu einer Verbindung mit einem Elektrozaunseil. Die Leitereinheit 22, 22', 24, insbesondere das zumindest eine Drahtelement 44, 44', 44", ist an zumindest drei verschiedenen Seiten der Gehäuseeinheit 18, 18', 20, zumindest teilweise außerhalb der Gehäuseeinheit 18, 18', 20 angeordnet, wobei die Seiten insbesondere in Bezug auf einen kleinsten gedachten Quader, welcher die Gehäuseeinheit 18, 18', 20 gerade noch vollständig umschließt, verschiedene Seiten des Quaders sind.

Das Drahtelement 44, 44', 44" ist derart gebogen ausgebildet, dass sich das Drahtelement 44, 44', 44" mit einer abschnittsweisen Längserstreckung des Drahtelements 44, 44', 44" parallel zu zumindest drei Koordinatenachsen erstreckt, welche jeweils senkrecht zueinander ausgerichtet sind.

Insbesondere ist das zumindest eine Drahtelement 44, 44', 44" zumindest teilweise entlang der zentral durch die Gehäuseeinheit 18, 18', 20 verlaufenden Längsachse 32, 32', 32" der Gehäuseeinheit 18, 18', 20 gebogen ausgebildet. Zwei Enden 50, 50', 52, 52', 54, 54', von insbesondere jeweils mindestens 3% der Gesamtlänge, des zumindest einen Drahtelements 44, 44', 44" sind entlang der zentral durch die Gehäuseeinheit 18, 18', 20 verlaufenden Längsachse 32, 32', 32" der Gehäuseeinheit 18, 18', 20 gebogen ausgebildet. Insbesondere weist das zumindest eine Drahtelement 44, 44', 44" drei Parallelabschnitte 56, 56', 56", 58, 58', 58", 60, 60', 60" auf, welche voneinander und von den Enden 50, 50', 52, 52', 54, 54' des zumindest einen Drahtelements 44, 44', 44" beabstandet sind. Insbesondere sind die drei voneinander beabstandeten und von Enden 50, 50', 52, 52', 54, 54' des zumindest einen Drahtelements 44, 44', 44" beabstandeten Parallelabschnitte 56, 56', 56", 58, 58', 58", 60, 60', 60" des zumindest einen Drahtelements 44, 44', 44" parallel zu der Längsachse 32, 32', 32" der Gehäuseeinheit 18, 18', 20 ausgerichtet, insbesondere gebogen ausgebildet.

Die drei Parallelabschnitte 56, 56', 56", 58, 58', 58", 60, 60', 60" sind vollständig außerhalb der Gehäuseeinheit 18, 18', 20 angeordnet. Zwei Parallelabschnitte 56, 56', 58, 58', 60, 60' sind an sich gegenüberliegenden Seiten, insbesondere einander um 180° abgewandten Seiten, der Gehäuseeinheit 18, 18', 20 angeordnet, insbesondere in Bezug auf Seiten des kleinsten gedachten Quaders, welcher die Gehäuseeinheit 18, 18', 20 gerade noch vollständig umschließt.

Das zumindest eine Drahtelement 44, 44', 44" weist zumindest sechs Senkrechtabschnitte 62 auf, mit jeweils einer Längserstreckung senkrecht zu der Längsachse 32, 32', 32" der Gehäuseeinheit 18, 18', 20. Zur besseren Übersicht ist lediglich ein Senkrechtabschnitt 62 jeder Drahteinheit in Figur 1 mit einem Bezugszeichen versehen.

Insbesondere sind Längsachsen direkt benachbarter Senkrechtabschnitte 62 in Winkeln von 90° zueinander ausgerichtet. Jeweils zwei Senkrechtabschnitte 62 sind direkt mit jeweils einem Parallelabschnitt 56, 56', 56", 58, 58', 58", 60, 60', 60" verbunden. Insbesondere sind direkt die jeweils zwei mit einem Parallelabschnitt 56, 56', 56", 58, 58', 58", 60, 60', 60" verbundenen Senkrechtabschnitte 62 parallel zueinander ausgerichtet. Insbesondere sind vier voneinander beabstandete Senkrechtabschnitte 62 parallel zueinander ausgerichtet, insbesondere in Bezug auf jeweilige Längsachsen. Insbesondere erstrecken sich genau zwei Senkrechtabschnitte 62 entlang einer ersten Koordinatenachse, genau vier zueinander parallele Senkrechtabschnitte 62 entlang einer zweiten Koordinatenachse und Enden 50, 50', 52, 52', 54, 54' des zumindest einen Drahtelements 44, 44', 44" sowie die Parallelabschnitte 56, 56', 56", 58, 58', 58", 60, 60', 60" entlang einer dritten Koordinatenachse, wobei alle Koordinatenachsen insbesondere senkrecht zueinander ausgerichtet sind.

Die elektrische Leitereinheit 24 der mittleren Verbindereinheit 16 umfasst zwei elektrische Verbindungselemente 28, 28'. Die zwei Verbindungselemente 28, 28' sind zumindest zum Großteil in der Gehäuseeinheit 20 an zwei einander abgewandten Seiten der Gehäuseeinheit 20 angeordnet (vgl. Fig. 2). Insbesondere sind die zumindest zwei Verbindungselemente 28, 28' gleich, insbesondere groß und/oder geformt, ausgebildet. Insbesondere sind die zwei Verbindungselemente 28, 28' als Verbindungsbuchsen ausgebildet. Insbesondere sind die zwei Verbindungselemente 28, 28' in verschiedene Richtungen ausgerichtet, insbesondere in Bezug auf Anschlussrichtungen der Verbindungselemente 28, 28'. Die zwei Verbindungselemente 28, 28' sind in einer Flucht zueinander angeordnet. Die Anschlussrichtungen der zwei Verbindungselemente 28, 28' sind parallel zu der Längsachse 32" der Gehäuseeinheit 20 der mittleren Verbindereinheit 16 ausgerichtet.

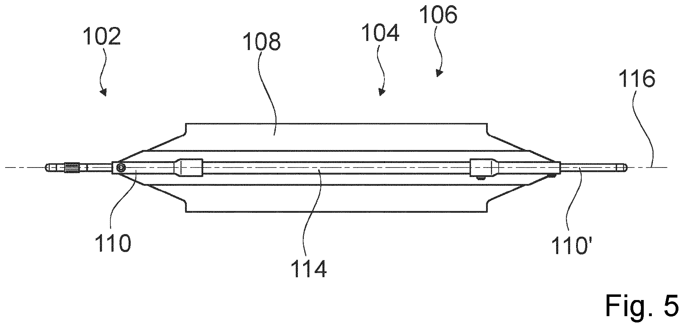

Figur 5 zeigt beispielhaft und stellvertretend für beide Verbinderkoppeleinheiten 102, 102' die Verbinderkoppeleinheit 102 der zwei Verbinderkoppeleinheiten 102, 102'.

Die Verbinderkoppeleinheiten 102, 102' weisen jeweils eine elektrische Leitereinheit 104, 104' und eine Gehäuseeinheit 106, 106' auf. Die elektrischen Leitereinheiten 104, 104' umfassen jeweils zwei elektrische Verbindungselemente 110, 110', 112, 112'. Die jeweils zwei elektrischen Verbindungselemente 110, 110', 112, 112' sind teilweise außerhalb der jeweiligen Gehäuseeinheit 106, 106' der jeweiligen Verbinderkoppeleinheit 102, 102' auf zwei einander abgewandten Seiten der jeweiligen Gehäuseeinheit 106, 106' angeordnet. Die Gehäuseeinheiten 106, 106' umfassen jeweils zwei Gehäuseplatten 108, 108', 120, 120'.

Die elektrische Leitereinheit 104, 104' jeder Verbinderkoppeleinheit 102, 102' weist zwei als Verbindungsfortsatz, insbesondere Bananenstecker, ausgebildete Verbindungselemente 110, 110', 112, 112' auf (vgl. Fig. 5). Insbesondere sind die zwei Verbindungselemente 110, 110', 112, 112' der Leitereinheit 104, 104'jeder Verbinderkoppeleinheit 102, 102' in einer Flucht zueinander an verschiedenen einander um 180° abgewandten Seiten der Gehäuseeinheit 106, 106' der Verbinderkoppeleinheit 102, 102' angeordnet.

Insbesondere sind die zwei Verbindungselemente 110, 110', 112, 112' der Leitereinheit 104, 104' der zumindest einen Verbinderkoppeleinheit 102, 102' gleich ausgebildet. Insbesondere weist die Leitereinheit 104, 104' der Verbinderkoppeleinheit 102, 102' jeweils ein Drahtelement 114, 114' auf, welches als ein gerader Draht ausgebildet ist und welches insbesondere mit den zwei Verbindungselementen 110, 110', 112, 112', insbesondere durch eine schraub- und/oder verformungsgesicherte Verbindung verbunden ist. Insbesondere sind die Verbindungselemente 110, 110', 112, 112' der Leitereinheit 104, 104' der zumindest einen Verbinderkoppeleinheit 102, 102' zu einer Verbindung mit den Verbindungselementen 26, 26', 28, 28' der Verbindereinheiten 14, 14', 16 ausgebildet, insbesondere zu den Verbindungselementen 26, 26', 28, 28' der Verbindereinheiten 14, 14', 16 korrespondierend geformt ausgebildet.

Insbesondere ist die Gehäuseeinheit 106, 106' der Verbinderkoppeleinheit 102, 102' länglich geformt ausgebildet. Insbesondere ist eine maximale Erstreckung der Gehäuseeinheit 106, 106' der Verbinderkoppeleinheit 102, 102' entlang einer Längsachse 116, 116' der Gehäuseeinheit 106, 106' mindestens dreimal so groß wie eine maximale Erstreckung der Gehäuseeinheit 106, 106' der Verbinderkoppeleinheit 102, 102' senkrecht zu der Längsachse 116, 116' der Gehäuseeinheit 106, 106'. Vorzugsweise umfasst die Gehäuseeinheit 106, 106' eine zu der Verbindungsschnittstelle korrespondierende Verbindungsschnittstelle, insbesondere an jedem Ende eine korrespondierende Verbindungsschnittstelle, zu einer lösbaren Verbindung mit der Verbindungsschnittstelle der Gehäuseeinheit 18, 18', 20. Bevorzugt ist die korrespondierende Verbindungsschnittstelle als Rastverbindungsschnittstelle ausgebildet und umfasst in Abhängigkeit von der Ausgestaltung der Verbindungsschnittstelle der Gehäuseeinheit 18, 18', 20 entweder zumindest einen federelastischen Rastfortsatz oder eine Rastausnehmung. Die im Folgenden beschriebene Ausgestaltung der korrespondierenden Verbindungsschnittstelle stellt lediglich eine beispielhafte Ausgestaltung dar und soll keine Beschränkung auf mögliche Ausgestaltungen der korrespondierenden Verbindungsschnittstelle darstellen. Insbesondere ist die Gehäuseeinheit 106, 106' an Enden entlang der Längsachse 116, 116' der Gehäuseeinheit 106, 106' A-förmig spitz zulaufend ausgebildet. Insbesondere ist die Gehäuseeinheit 106, 106' der Verbinderkoppeleinheit 102, 102' an Enden entlang der Längsachse 116, 116' der Gehäuseeinheit 106, 106' der Verbinderkoppeleinheit 102, 102' in V-förmigen Vertiefungen 38, 38', 40, 40' der Verbindereinheiten 14, 14', 16 genau passend geformt ausgebildet.

Jeweils zwei Verbindereinheiten 14, 14', 16 sind durch eine Verbinderkoppeleinheit 102, 102' an jeweiligen elektrischen Verbindungselementen 26, 26', 28, 28', 110, 110', 112, 112' miteinander verbunden, wobei die elektrischen Verbindungselemente 26, 26', 28, 28', 110, 110', 112, 112' vollständig in den Gehäuseeinheiten 18, 18', 20, 106, 106' der Verbindereinheiten 14, 14', 16 und der Verbinderkoppeleinheit 102, 102' angeordnet sind. Insbesondere sind außerhalb der jeweiligen Gehäuseeinheit 106, 106' angeordnete Abschnitte der als Steckfortsätze, insbesondere Bananenstecker, ausgebildeten Verbindungselemente 110, 110', 112, 112' vollständig in den als Steckerbuchsen, insbesondere Bananenbuchsen, ausgebildeten Verbindungselementen 26, 26', 28, 28' angeordnet zu einem Ausbilden einer Verbindung der Verbindereinheiten 14, 14', 16 mit den Verbinderkoppeleinheiten 102, 102' (vgl. Fig. 1 und 2).

Insbesondere schließen die Gehäuseeinheiten 18, 18', 20, 106, 106' der Verbindereinheiten 14, 14', 16 und der Verbinderkoppeleinheiten 102, 102' an den jeweiligen Verbindungselementen 26, 26', 28, 28', 110, 110', 112, 112' bündig ab zu einem vollständigen Umschließen der Verbindungselemente 26, 26', 28, 28', 110, 110', 112, 112' bei einem Ausbilden einer Verbindung der Verbindereinheiten 14, 14', 16 mit den Verbinderkoppeleinheiten 102, 102'.

Die weitere Gehäuseplatte 118, 118', 118" der Gehäuseeinheiten 18, 18', 20 der Verbindereinheiten 14, 14', 16 weist eine Parallelausnehmung 122, 122', 122" auf, welche eine Längsachse 124, 124', 124" aufweist, welche parallel zu der Längsachse 32, 32', 32" der Gehäuseeinheit 18, 18', 20 ausgerichtet ist. Die Parallelausnehmung 122, 122', 122" ist dazu ausgebildet, einen mittleren Parallelabschnitt 56", 58", 60" der drei Parallelabschnitte 56, 56', 56", 58, 58', 58", 60, 60', 60" des Drahtelements 44, 44', 44" aus der Gehäuseeinheit 18, 18', 20 ragen zu lassen (vgl. Fig.1 und 2).

Die erste Gehäuseplatte 36, 36', 36" und/oder die weitere Gehäuseplatte 118, 118', 118" weisen/weist zwei Senkrechtnuten auf, welche sich senkrecht zur Längsachse 32, 32', 32" der Gehäuseeinheit 18, 18', 20 über die gesamte jeweilige Gehäuseplatte 36, 36', 36" erstrecken, insbesondere zu einer zumindest teilweisen Aufnahme der Senkrechtabschnitte 62 des Drahtelements 44, 44', 44".

Jedes elektrische Verbindungselement 26, 26', 28, 28', 110, 110', 112, 112' ist zu einer Bananenverbindung ausgebildet. Insbesondere sind alle als Verbindungsfortsatz ausgebildeten Verbindungselemente 110, 110', 112, 112' als Bananenstecker, 4-mm Federstecker und/oder Lamellenstecker ausgebildet. Insbesondere sind alle als Verbindungsbuchse ausgebildeten Verbindungselemente 26, 26', 28, 28' als Bananenbuchse ausgebildet, welche einen Innendurchmesser von 4 mm aufweist.

Das zumindest eine elektrische Verbindungselement 26, 26', 28, 28' könnte alternativ als ein Verbindungsfortsatz ausgebildet sein. Insbesondere können die elektrischen Verbindungselemente 26, 26', 28, 28' der Verbindereinheiten 14, 14', 16 und der Verbinderkoppeleinheiten 102, 102' jeweils entgegengesetzt als Verbindungsfortsätze und als Verbindungsbuchsen ausgebildet sein.

Figur 6 zeigt eine Anordnung des Elektroconnectorsystems 100 an einem, insbesondere eine runde Querschnittsform aufweisenden, Zaunpfahl 126, wobei ein Teil des Elektroconnectorsystems 100 mittels einer Zubehörvorrichtung 128 für das Elektroconnectorsystem 100 an dem Zaunpfahl 126 angeordnet ist. Vorzugsweise sind in dem in Figur 6 dargestellten Anwendungsfall die Gehäuseeinheiten 18, 18', 20 von drei Verbindereinheiten 14, 14', 16 und die Gehäuseeinheiten 106, 106' von zwei Verbinderkoppeleinheiten 102, 102' des Elektroconnectorsystems 100 direkt am Zaunpfahl 126 angeordnet, insbesondere an einer einer Weidefläche zugewandten Seite 140 des Zaunpfahls 126 (in Figur 6 rechts von Zaunpfahl 126) angeordnet. Bevorzugt sind in dem in Figur 6 dargestellten Anwendungsfall Gehäuseeinheiten 132, 132' von zwei weiteren Verbindereinheiten 134, 134' und eine Gehäuseeinheit 136 von einer weiteren Verbinderkoppeleinheit 138 des Elektroconnectorsystems 100 mittels, insbesondere über, die Zubehörvorrichtung 128 am Zaunpfahl 126 angeordnet, insbesondere an einer der Weidefläche abgewandten Seite 142 des Zaunpfahls 126 (in Figur 6 links von Zaunpfahl 126) angeordnet. Vorzugsweise ist eine elektrische Leitereinheit 146, 148 der weiteren Verbindereinheiten 134, 134' mittels eines Elektroverbindungselements 144 des Elektroconnectorsystems 100 oder der Zubehörvorrichtung 128 elektrisch mit einer der elekrischen Leitereinheiten 22, 22', 24, 104, 104' der Verbindereinheiten 14, 14', 16 oder der Verbinderkoppeleinheiten 102, 102' verbunden. Das Elektroverbindungselement 144 kann als flexibles Leitungselement, wie beispielsweise als Kabel mit Steckverbindern o. dgl., oder als formsteifes Leitungselement, wie beispielsweise als stangenartiges Leitungselement mit Steckverbindern o. dgl., ausgebildet sein. Es ist auch denkbar, dass das Elektroverbindungselement 144 zumindest teilweise einteilig mit einer Pfahlverbindungseinheit 130 der Zubehörvorrichtung 128 ausgebildet ist.

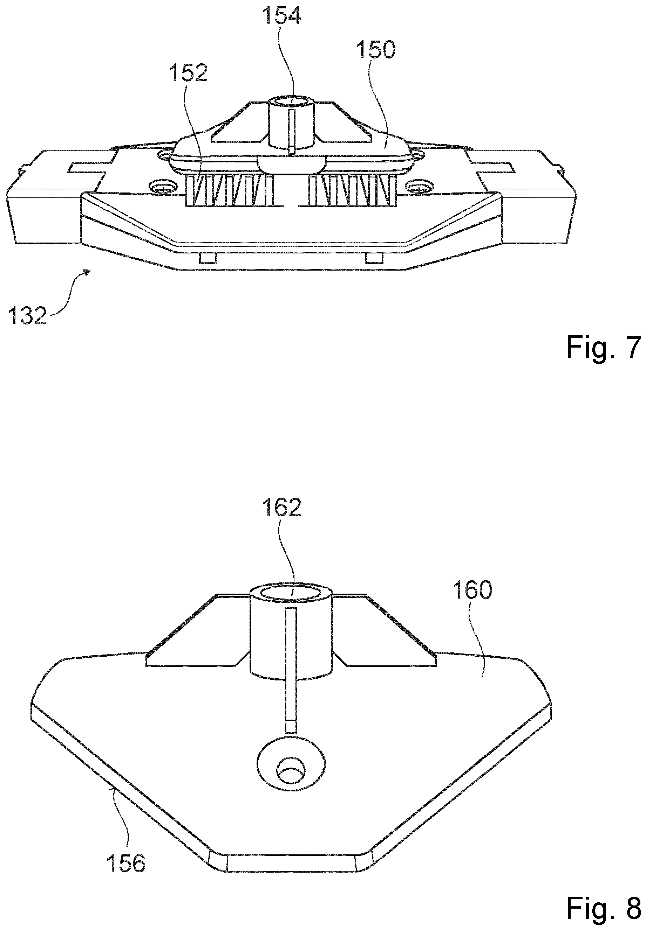

Die Zubehörvorrichtung 128 umfasst zumindest die Pfahlverbindungseinheit 130 zu einer Verbindung zumindest einer oder mehrerer der Gehäuseeinheiten 132, 132', 136 mit dem Zaunpfahl 126. Die Pfahlverbindungseinheit 130 umfasst in dem in Figur 6 dargestellten Anwendungsfall zumindest ein Gehäuseverbindungselement 150, 150', das lösbar mit einer der Gehäuseeinheiten 132, 132' der weiteren Verbindereinheiten 134, 134' verbindbar ist (vgl. auch Figur 7, in der eine Gehäuseeinheit 132 der weiteren Verbindereinheit 134 beispielhaft mit einem daran angeordneten Gehäuseverbindungselement 150 schematisch dargestellt ist). Vorzugsweise weist das Gehäuseverbindungselement 150, 150' zumindest eine Schnittstelle auf, die korrespondierend mit einem Verbindungsmittel 152 der Gehäuseeinheit 132 ausgebildet ist, insbesondere um eine Befestigung des Gehäuseverbindungselements 150, 150' an der Gehäuseeinheit 132 zu ermöglichen. Das Gehäuseverbindungselement 150, 150' umfasst vorzugsweise zumindest eine Abstandshalterverbindungsschnittstelle 154 (vgl. Figur 7). Die Abstandshalterverbindungsschnittstelle 154 ist zu einer Verbindung mit einem Abstandshalter 158, 158' (vgl. Figur 6) , wie beispielsweise einer Stange, einem Stab, einer Strebe o. dgl., der Pfahlverbindungseinheit 130 vorgesehen. Vorzugsweise ist die Abstandshalterverbindungsschnittstelle 154 als Aufnahme, wie beispielsweise als Hülse o. dgl., ausgebildet, in die der Abstandshalter 158, 158' einsteckbar ist, ausgebildet. Es ist jedoch auch denkbar, dass die Abstandshalterverbindungsschnittstelle 154 eine andere, einem Fachmann als sinnvoll erscheinende Ausgestaltung aufweist, wie beispielsweise als Gewinde, als Fortsatz o. dgl. Denkbar ist auch, dass eine elektrische Verbindung über den Abstandshalter 158 und die Abstandshalterverbindungsschnittstelle 154 erzeugbar ist, insbesondere um eine elektrische Verbindung der elektrischen Leitereinheit 146, 148 der weiteren Verbindereinheiten 134, 134' mit einer der elekrischen Leitereinheiten 22, 22', 24, 104, 104' der Verbindereinheiten 14, 14', 16 oder der Verbinderkoppeleinheiten 102, 102' zu ermöglichen. Bevorzugt umfasst die Pfahlverbindungseinheit 130 zumindest ein Pfahlverbindungselement 160, 160', das eine mit einer Außenform des Zaunpfahls 126 korrespondierende Zaunpfahlverbindungsschnittstelle 156, insbesondere eine konvexe Anlagefläche, aufweist. Das Pfahlverbindungselement 160, 160' umfasst vorzugsweise zumindest eine Abstandshalterverbindungsschnittstelle 162 (vgl. Figur 8) zu einer Verbindung mit dem Abstandshalter 158, 158'.

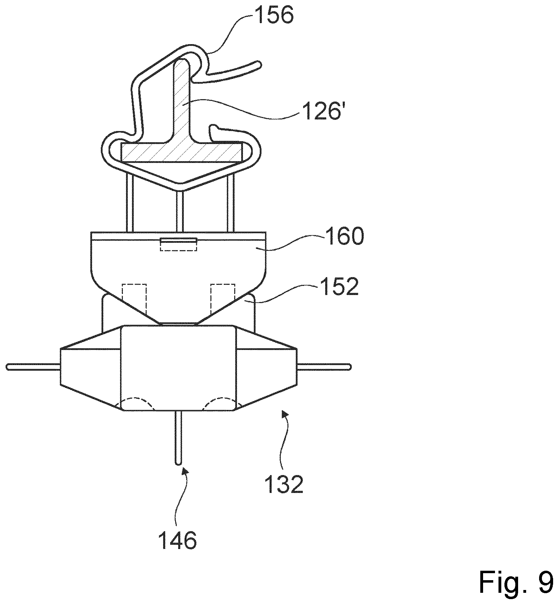

Figur 9 zeigt eine alternative Ausgestaltung des Pfahlverbindungselements 160, 160', insbesondere ohne Abstandshalterverbindungsschnittstelle 162, das an der Gehäuseeinheit 132, 132' angeordnet ist, insbesondere um eine Anordnung an einem alternativen Zaunpfahl 126' mit einer T-förmigen Querschnittsform zu ermöglichen (in Figur 9 ist beispielhaft lediglich das Pfahlverbindungselement 160, das an der Gehäuseeinheit 132 angeordnet ist, schematisch dargestellt). Das Pfahlverbindungselement 160 umfasst vorzugsweise eine Zaunpfahlverbindungsschnittstelle 156, mittels derer das Pfahlverbindungselement 160 an dem Zaunpfahl 126' anordenbar ist, insbesondere an dem Zaunpfahl 126' fixierbar, wie beispielsweise festklemmbar o. dgl., ist. Die Zaunpfahlverbindungsschnittstelle 156 kann als Klemmschnittstelle, als Rastschnittstelle, als Schraubschnittstelle o. dgl., ausgebildet sein. Die Zaunpfahlverbindungsschnittstelle 156 weist vorzugsweise eine mit der Grundform oder mit der Außenform des Zaunpfahls 126' korrespondierende T-förmige Anlage- und Klemmausnehmung zu einer Anordnung an dem Zaunpfahl 126' mit einer T-förmigen Querschnittsform auf. Andere, einem Fachmann als sinnvoll erscheinende Ausgestaltungen der Zaunpfahlverbindungsschnittstelle 156 sind ebenfalls denkbar.

## Patentansprüche

1. Elektroconnectorvorrichtung für einen Elektrozaun, mit zumindest einer Verbindereinheit (14, 14', 16) zu einem Verbinden eines Zaunpfahls (126, 126') mit einem Elektrozaunseil, die zumindest eine Gehäuseeinheit (18, 18', 20) und zumindest eine elektrische Leitereinheit (22, 22', 24) umfasst, **dadurch gekennzeichnet, dass** die elektrische Leitereinheit (22, 22', 24) zumindest ein elektrisches Verbindungselement (26, 26', 28, 28') umfasst, welches zumindest zum Großteil in der Gehäuseeinheit (18, 18', 20) angeordnet ist.

2. Elektroconnectorvorrichtung nach Anspruch 1, **dadurch gekennzeichnet, dass** das zumindest eine elektrische Verbindungselement (26, 26', 28, 28') als eine Verbindungsbuchse ausgebildet ist.

3. Elektroconnectorvorrichtung nach Anspruch 1 oder 2, **dadurch gekennzeichnet, dass** das zumindest eine elektrische Verbindungselement (26, 26', 28, 28') als ein Verbindungsfortsatz ausgebildet ist.

4. Elektroconnectorvorrichtung nach einem der vorhergehenden Ansprüche, **dadurch gekennzeichnet, dass** die Leitereinheit (22, 22', 24) an zumindest drei verschiedenen Seiten der Gehäuseeinheit (18, 18', 20) zumindest teilweise außerhalb der Gehäuseeinheit (18, 18', 20) angeordnet ist.

5. Elektroconnectorvorrichtung nach einem der vorhergehenden Ansprüche, **dadurch gekennzeichnet, dass** die Leitereinheit (22, 22', 24) zumindest ein Drahtelement (44, 44', 44") umfasst, welches derart gebogen ausgebildet ist, dass sich das Drahtelement (44, 44', 44") mit einer abschnittsweisen Längserstreckung des Drahtelements (44, 44', 44") parallel zu zumindest drei Koordinatenachsen erstreckt, welche jeweils senkrecht zueinander ausgerichtet sind.

6. Elektroconnectorvorrichtung nach einem der vorhergehenden Ansprüche, **dadurch gekennzeichnet, dass** die elektrische Leitereinheit (24) zumindest zwei elektrische Verbindungselemente (28, 28') umfasst, welche zumindest zum Großteil in der Gehäuseeinheit (20) an zwei einander abgewandten Seiten der Gehäuseeinheit (20) angeordnet sind.

7. Elektroconnectorvorrichtung nach einem der vorhergehenden Ansprüche, **dadurch gekennzeichnet, dass** die Gehäuseeinheit (18, 18', 20) eine erste Gehäuseplatte (36, 36', 36") und zumindest eine weitere Gehäuseplatte (118, 118', 118") aufweist.

8. Elektroconnectorvorrichtung nach einem der vorhergehenden Ansprüche, **dadurch gekennzeichnet, dass** jedes elektrische Verbindungselement (26, 26', 28, 28', 110, 110', 112, 112') zu einer Bananenverbindung ausgebildet ist.

9. Elektroconnectorsystem für einen Elektrozaun, mit zumindest zwei Elektroconnectorvorrichtungen (10, 10', 12) jeweils nach einem der vorhergehenden Ansprüche, **gekennzeichnet durch** zumindest eine Verbinderkoppeleinheit (102, 102') zu einem elektrischen Verbinden zumindest zweier Verbindereinheiten (14, 14', 16), welche eine elektrische Leitereinheit (104) und eine Gehäuseeinheit (106) umfasst, wobei die elektrische Leitereinheit (104) zumindest zwei elektrische Verbindungselemente (110, 110', 112, 112') umfasst, welche zumindest teilweise außerhalb der Gehäuseeinheit (106, 106') auf zwei einander abgewandten Seiten der Gehäuseeinheit (106, 106') angeordnet sind.

10. Elektroconnectorsystem nach Anspruch 9, **dadurch gekennzeichnet, dass** zumindest zwei Verbindereinheiten (14, 14', 16) durch die zumindest eine Verbinderkoppeleinheit (102, 102') an jeweiligen elektrischen Verbindungselementen (26, 26', 28, 28', 110, 110', 112, 112') miteinander verbunden sind, wobei die elektrischen Verbindungselemente (26, 26', 28, 28', 110, 110', 112, 112') vollständig in den Gehäuseeinheiten (18, 18', 20, 106, 106') der zumindest zwei Verbindereinheiten (14, 14', 16) und der Verbinderkoppeleinheit (102, 102') angeordnet sind.

11. Zubehörvorrichtung für eine Elektroconnectorvorrichtung nach einem der Ansprüche 1 bis 8 oder für ein Elektroconnectorsystem nach Anspruch 9 oder 10, mit zumindest einer Pfahlverbindungseinheit (130) zu einer Verbindung der Gehäuseeinheit (18, 18', 20, 106, 106') mit einem Zaunpfahl (126, 126').
